# EUROPEAN PATENT SPECIFICATION

(11) **EP 3 346 031 B1**
(45) Date of publication and mention of the grant of the patent: **18.11.2020**
(21) Application number: 17190667.0
(22) Date of filing: 12.09.2017
(51) Int. Cl.: D01F 1/09, D01F 1/10, D01F 6/04, A01K 61/60

(54) **MULTIFUNCTIONAL POLYMER COMPOSITE YARN**
VERBUNDGARN MIT MULTIFUNKTIONALEM POLYMER
FIL COMPOSITE POLYMÈRE MULTIFONCTIONNEL

(30) Priority: 10.01.2017 IN 201721000962
(43) Date of publication of application: 11.07.2018
(73) Proprietor: Garware-Wall Ropes Limited, 411019 Pune Maharashtra (IN)
(72) Inventor: RAUT, Sanjay Vasudeo, 411045 Pune Maharashtra (IN); GUNARI, Nikhil, 411008 Pune Maharashtra (IN)
(74) Representative: TL Brand & Co

(56) References cited:
- JP-A- S6 426 673
- DATABASE WPI Week 201719 Thomson Scientific, London, GB; AN 2016-78868T XP002780128, & CN 106 192 030 A (ZIBO MEIBIAO POLYMER FIBER CO LTD) 7 December 2016 (2016-12-07)
- Darilyn H. Roberts ET AL: "Advances in Maleated Polyolefins for Plastic Applications", Polymer Engineering and Science, 1 August 1997 (1997-08-01), pages 1421-1426, XP055467642, Retrieved from the Internet: URL:https://onlinelibrary.wiley.com/doi/pd f/10.1002/pen.11788 [retrieved on 2018-04-17]

## Description

### FIELD OF THE INVENTION:

The present invention relates generally to the composition of multifunctional polymer composite yarn that is negatively buoyant, has high abrasion resistance, a low coefficient of friction and resists biofilm formation.

### BACKGROUND OF THE INVENTION:

Marine Aquaculture is one of the fastest growing industries in the food sector and contributes significantly to the national economy of many countries. Globally commercial marine aquaculture has evolved into one of the most developed sectors in the food industry over the last decade.

Typical aquaculture farms use a negatively buoyant polymer nets such as Nylon or Polyester that are anchored to the ocean floor and suspended on the water surface by flotation devices, to farm fish like Salmon, Trout, Sea Bass, Sea Bream, etc.

Until a few years ago, Nylon nets were predominantly used to farm fish such as salmon, trout, sea bass, etc. Nylon nets are easy to install in water as they are negatively buoyant.

Any surface submerged in water is susceptible to biofouling. Both Micro and Macro fouling stick to Nylon and completely cover the mesh leading to reduced water flow in the aquaculture cage. This is detrimental to the fish.

Nylon nets are hence treated with copper oxide or zinc oxide based antifouling paints as a biocide. The biocides (copper oxide and zinc oxide) leach into the environment over a period of time and remain toxic to non-target species.

Nylon nets suffers from a major problem i.e., Nylon absorbs water and subsequently the strength drops after absorbing water. There is up to 40% drop in strength of Nylon after 3-4 years of submerging in water.

Nylon nets shrink easily and can shrink up to 5% in 3 years.

More recently polyolefin nets such as high density polyethylene (HDPE) netting have been introduced into the fish farming industry.

HDPE does not absorb water and hence does not show significant drop in strengths and hence shows zero shrinkage unlike Nylon.

However high density polyethylene nets have some drawbacks. Due to the low surface energy of HDPE, it is hard to bind antifouling paints to the HDPE nets. Therefore, HDPE nets require frequent underwater cleaning of nets in order to maintain the dissolved oxygen inside the cage.

Further, the low surface energy of HDPE helps in easy cleaning of the nets.

The other disadvantage of using HDPE nets is its floatation issue. HDPE has a specific gravity of 0.94 gm/cm³ and hence floats in seawater. This causes problems during installation and primarily during sea lice bath treatment.

The standard operating protocol for sea lice bath treatment using a tarpaulin, requires the holding cage net to be raised to 3-22.5m depth (depending on the country/site). The weight at the bottom of the cage is released. Then the net is raised to the waterline along one side of the cage, and the weighted leading edge of the tarpaulin is guided under the cage to the opposite side using the attached ropes. The tarpaulin is then fastened to the handrails using the ties along its margin, leaving the tarpaulin depth typically at 3-22.5m. The net should then be released by one or more loops to fill the enclosed volume and reduce the chance of the tarpaulin lifting during treatment.

During this treatment it is critical that the net is negatively buoyant for easy manipulation. If the net starts to float during sea lice bath treatment, several bags get formed in the net and fish get caught inside the bag leading to stress, damage to scales and even mortality.

Polyethylene nets has a specific gravity of less than 1 gm/cm3 and hence bags get formed during sea lice bath treatment so there is an immediate need for providing negative buoyancy to Polyethylene nets.

US8181438 discloses composite fishing line with net negative buoyancy in water made from two or more yarns of differing polymeric compositions, by braiding or twisting to form fishing lines of adequate diameter and tenacity. This patent however, fails to address the issues relating to surface energy and biofouling.

Polyethylene nets have low surface energy and hence impregnation with antifouling paints is difficult, so it is necessary to provide a mechanism by which polyethylene nets can be used in fish farming that will not biofoul quickly.

Similarly, polypropylene ropes also experience floatation issues.

Therefore, there appears a need in the art to provide novel multifunctional polyolefin composite yarn that exhibits negative buoyancy, protection from biofilm formation, better abrasion resistance and a low coefficient of friction.

### OBJECTIVES OF THE INVENTION

Therefore, it is an object of the present invention to provide novel multifunctional polyolefin composite yarn that possess negative buoyancy, protection from biofilm formation, improved abrasion resistance, and reduced coefficient of friction.

### SUMMARY OF THE INVENTION

Before the present methods, systems, and hardware enablement are described, it is to be understood that this invention is not limited to the particular systems, and methodologies described, as there can be multiple possible embodiments of the present invention which are not explicitly illustrated in the present disclosure. It is also to be understood that the terminology used in the description is for the purpose of describing the particular versions or embodiments only, and is not intended to limit the scope of the present invention.

The invention provides novel multifunctional polyolefin-metal-solid lubricant composite yarn comprising a) at least one polyolefin, b) at least one ultrafine metal particles with an average particle size of less than 120 microns, c) at least one ultrafine solid lubricant powder with an average particle size of less than 120 microns and d) a coupling agent, and e) a single site catalyst, wherein, the yarn exhibits negative buoyancy, reduced coefficient of friction and reduced micro and macro fouling underwater.

In another embodiment of the invention, the polyolefin yarn has a specific gravity greater than 0.95 gm/cm³. The percentage of the polyolefin in the multifunctional polyolefin composite yarn composition may be at least about 75%.

In another embodiment of the invention, the ultrafine metal particle with a specific gravity greater than 7 gm/cm³. The amount of the ultrafine metal particles in the composite yarn composition may be in the range of 0.1-25%.

The amount of the ultrafine solid lubricant powder in the composite yarn composition may be in the range of 0.1-25%.

In another embodiment of the invention, the composition comprises the coupling agent in the range of 0.1-10%.

The coupling agent may be selected from the group consisting of maleic anhydride modified polyethylene, ethylene vinyl acetate, and other coupling agents for polyolefin.

In yet another embodiment of the invention, the composition comprises a single site catalyst in the range of up to 10%. The single site catalyst may be selected from the group consisting of organometallic compounds such as bis(n-butyl cyclopentadienyl) zirconium dichloride and other supported organometallic catalysts.

The multi/mono polyolefin composite yarn according to the invention may have a tenacity of greater than 5 grams per denier.

The polyolefin composite yarn according to the invention may exhibit specific gravity greater than 0.95 gm/cm³.

Also discussed herein is a process for manufacturing a multifunctional polyolefin-metal-solid lubricant composite yarn, which process comprises; extruding the blend consisting of at least one polyolefin, at least one additive with specific gravity greater than 7 gm/cm3, at least one solid lubricant powder and at least one coupling agent, and optionally also a single site catalyst, with extrusion parameters - barrel temperature profile of 200-260°C and by maintaining quench bath temperature at 21°C and stretching hot water bath at 94°C.

The yarn thus produced being negatively buoyant suitable for twisting into twine useful in the manufacture of nets for aquaculture; fish farming and antimicrobial fishing nets. The multifunctional composite yarn is further useful in the production of fishing nets as well due to its negatively buoyant and low coefficient of friction, which helps in reduction of fuel costs and can increase fish catch.

The tenacity of the yarn thus produced in accordance with the process may be 5 grams per denier or higher.

### DETAILED DESCRIPTION OF THE INVENTION:

Some embodiments of this invention, illustrating all its features, will now be discussed in detail.

The words "comprising," and "containing," and other forms thereof, are intended to be equivalent in meaning and be open ended in that an item or items following any one of these words is not meant to be an exhaustive listing of such item or items, or meant to be limited to only the listed item or items.

It must also be noted that as used herein, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

In a preferred embodiment, the invention describes a multifunctional polyolefin-metal-solid lubricant composite yarn that is produced by the extrusion of a blend/composition comprising of at least one polyolefin at least one additive with specific gravity greater than 7 gm/cm³, at least one ultrafine metal particle, at least one ultrafine solid lubricant powder and at least one coupling agent, and also a single site catalyst. The yarn thus produced being negatively buoyant suitable for twisting into twine useful in the manufacture of nets for aquaculture; fish farming and antimicrobial fishing nets. The multifunctional composite yarn is further useful in the production of fishing nets as well due to its negatively buoyant and low coefficient of friction, which helps in reduction of fuel costs and can increase fish catch.

A "polyolefin-metal-solid lubricant composite yarn" is a yarn comprising a polyolefin, metal particles and solid lubricant particles. Preferably, the polyolefin, metal particles and solid lubricant particles are present within a single layer of material within the yarn. There is therefore preferably a single material within the yarn that comprises all three components. Thus, in this preferred embodiment, a coating comprising metal and lubricant particles on a polyolefin yarn would not form a composite yarn according to the invention.

In another embodiment, the invention provides novel multifunctional polyolefin-metal-solid lubricant composite yarn composition which comprises, a) at least one high molecular weight polyolefin, b) at least one ultrafine metal particle with specific gravity greater than 7 gm/cm³, c) at least one ultrafine solid lubricant powder and d) at least one coupling agent, and also e) a single site catalyst.

In a specific embodiment, the composition comprises high density polyethylene with melt flow index (at 2.16 Kg load) of < 1 gm/10 min.

In a specific embodiment, the polyolefin-metal-solid lubricant yarn has a specific gravity greater than 0.95 gm/cm³. The blend/composition may comprise at least about 75% of polyolefin. The polyolefin may be selected from the group consisting of high density polyethylene (for example, Relene 53EA 010, Relene HD55EF010), low density polyethylene, polypropylene and any other polyolefin.

The ultrafine metal particle may be selected from the group consisting of copper, zinc, lead, molybdenum, tungsten, nickel and alloys of the metals having specific gravity greater than 7 gm/cm³. The ultrafine metal particles preferably comprise an elemental metal.

The amount of the ultrafine metal particles in the composite yarn composition may be in the range of 0.1-25%.

In a specific embodiment, the blend/composition comprises ultrafine copper nickel alloy powder as an additive with specific gravity of 8.9 gm/cm³ with an average particle size of 120 microns.

In a specific embodiment, the blend/composition comprises 6% of ultrafine copper nickel alloy powder.

The amount of the ultrafine solid lubricant powder in the composite yarn composition may be in the range of 0.1-25%.

The ultrafine solid lubricant powder may be selected from the group consisting of graphite, molybdenum disulphide, tungsten disulphide, copper oxide, zinc oxide, boron nitride and other inorganic & organic solid lubricants that reduce the coefficient of friction.

In another specific embodiment, the blend/composition comprises ultrafine molybdenum sulphide as solid lubricating agent with an average particle size of 120 microns.

In a specific embodiment, the blend/composition comprises 4% of ultrafine molybdenum disulphide powder.

In another embodiment of the invention, the composition comprises 0.1-10% of coupling agent. The coupling agent may be selected from the group consisting of maleic anhydride modified polyethylene (Fusabond E100), ethylene vinyl acetate, and other coupling agents for polyolefin.

In another specific embodiment, the blend/composition comprises 5% of Fusabond E100 (Dupont), which acts as a coupling agent.

In another preferred embodiment, the blend/composition comprises a single site catalyst in the range of up to 10%. The single site catalyst may be selected from the group consisting of organometallic compounds such as bis(n-butyl cyclopentadienyl) zirconium dichloride and other supported organometallic catalysts.

In a preferred embodiment the yarn is manufactured from 65-2000 denier.

The multi/mono polyolefin composite yarn according to the invention may have a tenacity of greater than 5 grams per denier.

The polyolefin composite yarn according to the invention may exhibit specific gravity greater than 0.95 gm/cm3 and hence can be used to fabricate fishing and aquaculture nets.

### EXAMPLES

### Example 1:

Extrusion was performed using a composition comprising of 70% Relene 53EA 010, 14% Relene HD55EF010, 6% ultrafine copper nickel alloy powder, 4% ultrafine molybdenum disulphide powder and 6% Fusabond E100. Extrusion of 120 denier monofilaments in 2 joints was performed having temperature profile in the extrusion barrel from 200-260 °C. The die used was having 120 holes. The quench bath temperature was 21 °C. The stretching hot water bath was at 94 °C. Tenacity achieved was 8 gpd with an elongation of 13%.

### Example 2:

Extrusion was performed using a composition comprising of 72% Relene 53EA 010, 14% Relene HD55EF010, 8% ultrafine copper nickel alloy powder, 2% ultrafine graphite powder and 4% Fusabond E100. Extrusion of 120 denier monofilaments in 2 joints was performed having temperature profile in the extrusion barrel from 200-260 °C. The die used was having 120 holes. The quench bath temperature was 21 °C. The stretching hot water bath was at 94 °C. Tenacity achieved was 7.5 gpd with an elongation of 12%.

### Example 3:

Extrusion was performed using a composition comprising of 72% Relene 53EA 010, 15% Relene HD55EF010, 5% ultrafine copper (99.9%) powder, 3% ultrafine copper oxide powder and 5% Fusabond E100. Extrusion of 120 denier monofilaments in 2 joints was performed having temperature profile in the extrusion barrel from 200-260 °C. The die used was having 120 holes. The quench bath temperature was 21 °C. The stretching hot water bath was at 94 °C. Tenacity achieved was 8.2 gpd with an elongation of 12%.

### Example 4:

Extrusion was performed using a composition comprising of 72% Relene 53EA 010, 16% Relene HD55EF010 3% ultrafine copper (99.9%) powder, 3% tungsten, 2% ultrafine copper oxide powder and 4% Fusabond E100. Extrusion of 120 denier monofilaments in 2 joints was performed having temperature profile in the extrusion barrel from 200-260 °C. The die used was having 120 holes. The quench bath temperature was 21 °C. The stretching hot water bath was at 94 °C. Tenacity achieved was 7.8 gpd with an elongation of 12%.

### Example 5:

Extrusion was performed using a composition comprising of 72% Relene 53EA 010, 16% Relene HD55EF010, 2% ultrafine tungsten powder, 2% ultrafine lead powder, 4% ultrafine copper oxide powder and 4% Fusabond E100. Extrusion of 120 denier monofilaments in 2 joints was performed having temperature profile in the extrusion barrel from 200-260 °C. The die used was having 120 holes. The quench bath temperature was 21 °C. The stretching hot water bath was at 94 °C. Tenacity achieved was 7.7 gpd with an elongation of 13%.

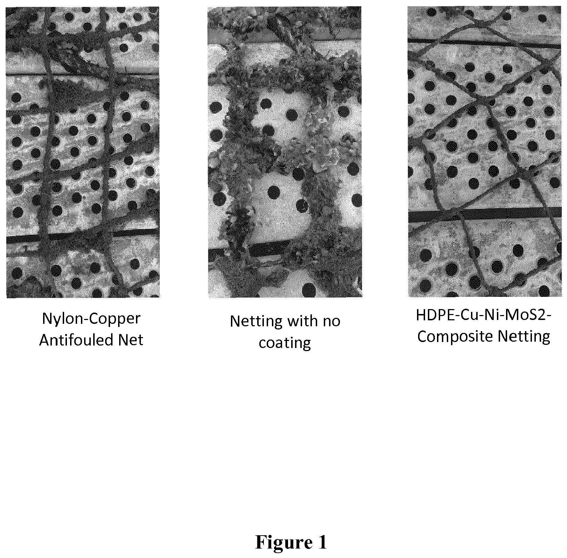

## Claims

1. A multifunctional polyolefin-metal-solid lubricant composite yarn comprising a) at least one polyolefin, b) at least one ultrafine metal particle with an average particle size of less than 120 microns, c) at least one ultrafine solid lubricant powder with an average particle size of less than 120 microns and d) a coupling agent, and e) a single site catalyst, wherein, the yarn exhibits negative buoyancy, reduced coefficient of friction and reduced micro and macro fouling underwater.

2. The composite yarn according to claim 1, wherein the polyolefin is present at least in an amount of 75%.

3. The composite yarn according to claim 1, wherein the ultrafine metal particle is present in an amount of 0.1-25%.

4. The composite yarn according to claim 1, wherein the ultrafine solid lubricant powder is present in an amount of 0.1-25%.

5. The composite yarn according to claim 1, wherein the coupling agent is present in an amount of 0.1-10%.

6. The composite yarn according to claim 1, wherein the single site catalyst is present in an amount of up to 10%.

7. The composite polyolefin yarn according to claim 1, wherein the specific gravity of the yarn is greater than 0.95 gm/cm³.

8. The composite yarn according to claims 1 and 2, wherein, the polyolefin is selected from the group consisting of high density polyethylene, low density polyethylene, polypropylene, and any other polyolefin.

9. The composite yarn according to claims 1 and 3, wherein, the ultrafine metal particle has a specific gravity greater than 7 gm/cm³.

10. The composite yarn according to claims 1 and 3, wherein, the ultrafine metal particle is selected from the group consisting of copper, zinc, lead, molybdenum, tungsten, nickel and alloys of metals having specific gravity greater than 7 gm/cm³.

11. The composite yarn according to claims 1 and 4, wherein, the ultrafine solid lubricant powder is selected from the group consisting of graphite, molybdenum disulphide, tungsten disulphide, copper oxide, zinc oxide, boron nitride, and other inorganic and organic solid lubricants that reduce the coefficient of friction.

12. The composite yarn according to claims 1 and 5, wherein, the coupling agent is selected from the group consisting of maleic anhydride modified polyethylene, ethylene vinyl acetate, and other coupling agents for polyolefin.

13. The composite yarn according to claims 1 and 6, wherein, the single site catalyst is selected from the group consisting of organometallic compounds such as bis(n-butyl cyclopentadienyl) zirconium dichloride, methylaluminoxane and other supported organometallic catalysts.

14. The composite yarn according to claim 1 having a tenacity of greater than 5 grams per denier.

15. The multifunctional polyolefin-metal-solid lubricant composite yarn according to any of the preceding claims prepared by extrusion process.

16. A fishing net or rope or aquaculture net, rope or fabric comprising the polyolefin composite yarn according to claim 1, wherein the specific gravity of the yarn is greater than 0.95 gm/cm³.

## Patentansprüche

1. Multifunktionales Polyolefin-Metall-Feststoff-Schmiermittel-Verbundgarn, das Folgendes umfasst: a) mindestens ein Polyolefin, b) mindestens ein ultrafeines Metallteilchen mit einer durchschnittlichen Teilchengröße von weniger als 120 Mikrometern, c) mindestens ein ultrafeines festes Schmiermittelpulver mit einer durchschnittlichen Partikelgröße von weniger als 120 Mikron und d) einen Haftvermittler und e) ein Single-Site-Katalysator, wobei das Garn einen negativen Auftrieb, einen verringerten Reibungskoeffizienten und eine verringerte Mikro- und Makroverfaulung unter Wasser aufweist.

2. Verbundgarn nach Anspruch 1, wobei das Polyolefin mindestens in einer Menge von 75% vorliegt.

3. Verbundgarn nach Anspruch 1, wobei das ultrafeine Metallteilchen in einer Menge von 0,1 bis 25% vorliegt.

4. Verbundgarn nach Anspruch 1, wobei das ultrafeine feste Schmiermittelpulver in einer Menge von 0,1 bis 25% vorliegt.

5. Verbundgarn nach Anspruch 1, wobei der Haftvermittler in einer Menge von 0,1 bis 10% vorliegt.

6. Verbundgarn nach Anspruch 1, wobei der Single-Site-Katalysator in einer Menge von bis zu 10% vorliegt.

7. Polyolefin-Verbundgarn nach Anspruch 1, wobei das spezifische Gewicht des Garns größer als 0,95 g/cm³ ist.

8. Verbundgarn nach Anspruch 1 und 2, wobei das Polyolefin ausgewählt ist aus der Gruppe bestehend aus Polyethylen hoher Dichte, Polyethylen niedriger Dichte, Polypropylen und einem anderen Polyolefin.

9. Verbundgarn nach Anspruch 1 und 3, wobei das ultrafeine Metallteilchen ein spezifisches Gewicht von mehr als 7 g/cm³ aufweist.

10. Verbundgarn nach Anspruch 1 und 3, wobei das ultrafeine Metallteilchen ausgewählt ist aus der Gruppe bestehend aus Kupfer, Zink, Blei, Molybdän, Wolfram, Nickel und Legierungen von Metallen mit einem spezifischen Gewicht von mehr als 7 g/cm³.

11. Verbundgarn nach Anspruch 1 und 4, wobei das ultrafeine feste Schmiermittelpulver ausgewählt ist aus der Gruppe bestehend aus Graphit, Molybdändisulfid, Wolframdisulfid, Kupferoxid, Zinkoxid, Bornitrid und anderen anorganischen und organischen festen Schmiermitteln, die den Reibungskoeffizienten verringern.

12. Verbundgarn nach Anspruch 1 und 5, wobei der Haftvermittler ausgewählt ist aus der Gruppe bestehend aus Maleinsäureanhydrid-modifiziertem Polyethylen, Ethylenvinylacetat und anderen Haftvermittlern für Polyolefin.

13. Verbundgarn nach Anspruch 1 und 6, wobei der Single-Site-Katalysator ausgewählt ist aus der Gruppe bestehend aus metallorganischen Verbindungen wie Bis(n-butylcyclopentadienyl)zirkoniumdichlorid, Methylaluminoxan und anderen metallorganischen Trägerkatalysatoren.

14. Verbundgarn nach Anspruch 1 mit einer Zähigkeit von mehr als 5 g pro Denier.

15. Multifunktionales Polyolefin-Metall-Feststoff-Schmiermittel-Verbundgarn nach einem der vorhergehenden Ansprüche, das durch ein Extrusionsverfahren hergestellt wird.

16. Fischernetz oder Seil oder Aquakulturnetz, Seil oder Gewebe, das das Polyolefin-Verbundgarn nach Anspruch 1 umfasst, wobei das spezifische Gewicht des Garns größer als 0,95 g/cm³ ist.

## Revendications

1. Fil composite multifonctionnel polyoléfine-métal-lubrifiant solide comprenant a) au moins une polyoléfine, b) au moins une particule de métal ultrafine avec une granulométrie moyenne inférieure à 120 microns, c) au moins une poudre lubrifiante solide ultrafine avec une granulométrie moyenne inférieure à 120 microns et d) un agent de couplage, et e) un catalyseur à site unique, dans lequel le fil présente une flottabilité négative, un coefficient de frottement réduit et un micro et macro encrassement sous l'eau réduit.

2. Fil composite selon la revendication 1, dans lequel la polyoléfine est présente au moins en une quantité de 75%.

3. Fil composite selon la revendication 1, dans lequel la particule de métal ultrafine est présente en une quantité de 0,1 à 25%.

4. Fil composite selon la revendication 1, dans lequel la poudre lubrifiante solide ultrafine est présente en une quantité de 0,1 à 25%.

5. Fil composite selon la revendication 1, dans lequel l'agent de couplage est présent en une quantité de 0,1 à 10%.

6. Fil composite selon la revendication 1, dans lequel le catalyseur à site unique est présent en une quantité allant jusqu'à 10%.

7. Fil composite de polyoléfine selon la revendication 1, dans lequel la densité du fil est supérieure à 0,95 g/cm³.

8. Fil composite selon les revendications 1 et 2, dans lequel, la polyoléfine est choisie dans le groupe constitué par le polyéthylène haute densité, le polyéthylène basse densité, le polypropylène et toute autre polyoléfine.

9. Fil composite selon les revendications 1 et 3, dans lequel, la particule de métal ultrafine a une densité supérieure à 7 g/cm³.

10. Fil composite selon les revendications 1 et 3, dans lequel, la particule de métal ultrafine est choisie dans le groupe constitué par le cuivre, le zinc, le plomb, le molybdène, le tungstène, le nickel et les alliages de métaux de densité supérieure à 7 g/cm³.

11. Fil composite selon les revendications 1 et 4, dans lequel, la poudre lubrifiante solide ultrafine est choisie dans le groupe constitué par le graphite, le bisulfure de molybdène, le bisulfure de tungstène, l'oxyde de cuivre, l'oxyde de zinc, le nitrure de bore et d'autres lubrifiants solides inorganiques et organiques qui réduisent le coefficient de frottement.

12. Fil composite selon les revendications 1 et 5, dans lequel l'agent de couplage est choisi dans le groupe constitué par le polyéthylène modifié à l'anhydride maléique, l'éthylène acétate de vinyle et d'autres agents de couplage pour polyoléfine.

13. Fil composite selon les revendications 1 et 6, dans lequel le catalyseur à site unique est choisi dans le groupe constitué de composés organométalliques tels que le dichlorure de zirconium bis(n-butyl cyclopentadiényl), le méthylaluminoxane et d'autres catalyseurs organométalliques supportés.

14. Fil composite selon la revendication 1 ayant une ténacité supérieure à 5 grammes par denier.

15. Fil composite multifonctionnel polyoléfine-métal-lubrifiant solide selon l'une quelconque des revendications précédentes préparé par un procédé d'extrusion.

16. Filet de pêche ou corde ou filet, corde ou tissu d'aquaculture comprenant le fil composite de polyoléfine selon la revendication 1, dans lequel la densité du fil est supérieure à 0,95 g/cm³.
